(19) Europäisches Patentamt
European Patent Office
Office européen des brevets

(11) **EP 2 681 573 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **12707294.0**

(22) Anmeldetag: **02.03.2012**

(51) Int Cl.:
*G01R 31/26* (2006.01)    *H02S 50/10* (2014.01)

(86) Internationale Anmeldenummer:
**PCT/EP2012/053671**

(87) Internationale Veröffentlichungsnummer:
**WO 2012/117105 (07.09.2012 Gazette 2012/36)**

(54) **VERFAHREN ZUR QUALITÄTSPRÜFUNG EINER PHOTOVOLTAISCHEN SOLARZELLE, SOLARZELLENMODUL UND VERFAHREN ZUR HERSTELLUNG EINER PHOTOVOLTAISCHEN SOLARZELLE**

METHOD FOR TESTING THE QUALITY OF A PHOTOVOLTAIC SOLAR CELL, SOLAR CELL MODULE AND METHOD FOR PRODUCING A PHOTOVOLTAIC SOLAR CELL

PROCÉDÉ DE CONTRÔLE DE QUALITÉ D'UNE CELLULE SOLAIRE PHOTOVOLTAÏQUE, MODULE DE CELLULES SOLAIRES ET PROCÉDÉ DE FABRICATION D'UNE CELLULE SOLAIRE PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2011 DE 102011012868**
**02.09.2011 DE 102011112100**

(43) Veröffentlichungstag der Anmeldung:
**08.01.2014 Patentblatt 2014/02**

(73) Patentinhaber:
• **Fraunhofer-Gesellschaft zur Förderung der angewandten Forschung e.V.**
**80686 München (DE)**
• **Albert-Ludwigs-Universität Freiburg**
**79098 Freiburg (DE)**

(72) Erfinder:
• **FERTIG, Fabian**
**79117 Freiburg (DE)**
• **REIN, Stefan**
**79211 Denzlingen (DE)**

(56) Entgegenhaltungen:
• **K. Bothe, K. Ramspeck, D. Hinken, C. Schinke, J. Schmidt: "Luminescence emission from forward- and reverse-biased multicrystalline silicon solar cells", Journal of Applied Physics, Bd. 106, Nr. 104510 23. November 2009 (2009-11-23), Seiten 104510-1-104510-8, XP002675246, Gefunden im Internet: URL:http://scitation.aip.org/getpdf/servle t/GetPDFServlet?filetype=pdf&id=JAPIAU0001 06000010104510000001&idtype=cvips&doi=10.1 063/1.3256199&prog=normal [gefunden am 2012-05-03]**
• **HISAMATSU T ET AL: "Reverse bias characteristics of modules made of solar cells with and without integrated bypass function (IBF)", 19960513; 19960513 - 19960517, 13. Mai 1996 (1996-05-13), Seiten 251-254, XP010208139,**
• **FIELD H ET AL: "Cell binning method analysis to minimize mismatch losses and performance variation in Si-based modules", CONFERENCE RECORD OF THE IEEE PHOTOVOLTAIC SPECIALISTS CONFERENCE 2002 INSTITUTE OF ELECTRICAL AND ELECTRONICS ENGINEERS INC. US; [IEEE PHOTOVOLTAIC SPECIALISTS CONFERENCE],, Bd. CONF. 29, 19. Mai 2002 (2002-05-19), Seiten 418-421, XP010666316, DOI: 10.1109/PVSC.2002.1190548 ISBN: 978-0-7803-7471-3**

- ANKUR JHUNJHUNWALA: "An alternate cell binning method and the resulting economic-impact", PHOTOVOLTAIC SPECIALISTS CONFERENCE (PVSC), 2009 34TH IEEE, IEEE, PISCATAWAY, NJ, USA, 7. Juni 2009 (2009-06-07), Seiten 1822-1825, XP031626757, ISBN: 978-1-4244-2949-3
- H. FIELD, A.M. GABOR: "Optimization of binning schemes during Si-wafer based cell and module testing", NINETEENTH EUROPEAN PHOTOVOLTAIC SOLAR ENERGY CONFERENCE : PROCEEDINGS OF THE INTERNATIONAL CONFERENCE HELD IN PARIS, FRANCE, 7 - 11 JUNE 2004, MÜNCHEN : WIP-MUNICH ; FLORENCE : ETA-FLORENCE, 7. Juni 2004 (2004-06-07), XP040510861, ISBN: 978-3-936338-15-7
- ROBERTO GIRAL ET AL: "Minimizing the effects of shadowing in a PV module by means of active voltage sharing", INDUSTRIAL TECHNOLOGY (ICIT), 2010 IEEE INTERNATIONAL CONFERENCE ON, IEEE, PISCATAWAY, NJ, USA, 14. März 2010 (2010-03-14), Seiten 943-948, XP031681011, ISBN: 978-1-4244-5695-6
- H. Oldenkamp: "Detailed analysis of currents in PV-shunts", , 5. Februar 2011 (2011-02-05), XP002675249, Gefunden im Internet: URL:http://oke-services.nl/downloads/200202_pvwirefree_note.pdf [gefunden am 2012-05-04]
- IEC NORM: "International standard IEC61215 (second edition 2005): Crystalline silicon terrestrial photovoltaic (PV) modules - Design qualification and type approval", INTERNET CITATION, 1 April 2005 (2005-04-01), page Complete, XP008151527, Retrieved from the Internet: URL:http://www.google.fr/#hl=fr&sclient=psy-ab&q=IEC61215++2005&oq=IEC61215++2005&aq =f&aqi=g-lvL1&aql=&gs_l=hp.3..0i13i15i19.1 249.4155.0.4404.6.6.0.0.0.0.937.1485.0j1j0 j1j6-1.3.0...0.0.sTrsRIOV8eA&pbx=1&bav=on. 2,or.r_gc.r_pw.r_qf.,cf.osb&fp=50fabbba354 52d5b&biw=1053&bih=663 [retrieved on 2012-05-07]

## Beschreibung

Die Erfindung betrifft ein Verfahren zur Qualitätsprüfung einer photovoltaischen Solarzelle gemäß Oberbegriff des Anspruchs 1, eine Verwendung einer photovoltaischen Solarzelle gemäß Anspruch 6, ein Solarzellenmodul gemäß Oberbegriff des Anspruchs 7 sowie ein Verfahren zur Herstellung einer photovoltaischen Solarzelle gemäß Oberbegriff des Anspruchs 10.

Eine photovoltaische Solarzelle stellt ein flächiges Halbleiterbauelement dar, bei dem mittels einfallender elektromagnetischer Strahlung Ladungsträgerpaare erzeugt und anschließend getrennt werden, so dass zwischen mindestens zwei metallischen Kontaktierungsstrukturen der Solarzelle ein Potential entsteht und über einen mit diesen Kontaktierungsstrukturen verbundenen externen Stromkreis elektrische Leistung von der Solarzelle abgegriffen werden kann. Die Ladungsträgertrennung erfolgt an einem pn-Übergang und/oder einem pin-Übergang, der beispielsweise dadurch realisiert werden kann, dass in einem Siliziumsubstrat eines Basisdotierungstyps eine Dotierung eines hierzu entgegengesetzten Dotierungstyps zur Ausbildung eines Emitters vorgenommen wird. Ebenso ist es bekannt, den Emitter durch Aufbringen einer oder mehrerer Schichten auf einem Basissubstrat auszubilden.

Zur Umwandlung einfallender elektromagnetischer Strahlung in elektrische Energie werden Module verwendet, welche eine Vielzahl von photovoltaischen Solarzellen umfassen. Bei dem Einbau in ein photovoltaisches Modul werden die Solarzellen typischerweise in Reihenschaltung zu so genannten Strings zusammengesetzt. Ein Modul umfasst typischerweise mehrere Strings. Bei Betrieb eines solchen Moduls kann sich folgende Problematik ergeben:

Unter bestimmten Umständen wird bei dem Betrieb des Moduls ein Teil der enthaltenen Solarzellen abgeschattet, beispielsweise durch Laub oder andere Gegenstände, die sich zwischen Lichtquelle (typischerweise die Sonne) und Solarzelle befinden. Ebenso findet eine Teilabschattung aufgrund des Laufes der Sonne durch feststehende Gegenstände wie Bäume, Schornsteine oder ähnliches oder temporär durch Reinigungs- oder Wartungspersonal, durch Schnee oder Verschmutzung wie z.B. Vogelexkremente statt.

Der von einer Solarzelle erzeugte Strom ist unter Anderem von der Beleuchtungsstärke abhängig, mit der die jeweilige Solarzelle beaufschlagt wird. Wird nun ein Teil der in Reihe geschalteten Solarzellen in einem String teilweise oder vollständig abgeschattet, kann eine Umkehrung der Polarität dieser abgeschatteten Solarzellen auftreten, da die erzeugte Stromstärke dieser Solarzellen geringer ist als die der vollständig beleuchteten Solarzellen. Diese Umkehrung findet typischerweise statt, sofern die Kurzschlussstromdichte $J_{sc}$ der abgeschatteten Solarzelle kleiner ist als die Kurzschlussstromdichten der nicht abgeschatteten Solarzellen im String.

Die abgeschatteten Solarzellen werden in diesem Fall in Sperrrichtung betrieben, d. h. an diesen Solarzellen liegt an den metallischen Kontaktierungen eine Spannung in Sperrrichtung an, die eine umgekehrte Polarität verglichen mit der bei nicht abgeschatteten Solarzellen an den metallischen Kontaktierungen anliegenden Spannung aufweist. Die Stromstärke des gesamten Strings, in dem sich die ganz oder teilweise abgeschatteten Solarzellen befinden, und damit die erzeugte elektrische Leistung dieses Strings, werden typischerweise durch die Abschattung stark verringert, zumindest sofern typische Solarzellenmodule mit Standardsolarzellen mit einem der industriellen Fertigung typischen Modulaufbau verwendet werden, deren Strings in Serie geschaltet sind und jeweils eine Bypassdiode aufweisen. Bei Standardmodulen mit Bypassdioden verringert sich somit die elektrische Ausgangsleistung des Moduls in der Regel bei Teilabschattung um die volle Leistung des Strings, in dem sich eine abgeschattete Solarzelle befindet.

Hierbei und im Folgenden wird als negative Spannung oder in Sperrrichtung anliegende Spannung wie üblich der Zustand bezeichnet, dass an den metallischen Kontaktierungen einer Solarzelle eine Spannung entgegengesetzt zu der Spannung in normalem Betrieb vorliegt. Die Spannung in normalem (insbesondere unabgeschattetem) Betrieb wird wie üblich als positive Spannung oder Spannung in Vorwärtsrichtung bezeichnet.

Je nach Aufbau des Moduls und der Art der Abschattung kann die an den abgeschatteten Solarzellen anliegende Spannung somit negativ sein und es somit in der Solarzelle zu einem Verbrauch elektrischer Energie kommen (im Wesentlichen durch Umwandlung elektrischer Energie in Wärme). Die Umwandlung von elektrischer Energie in den in Sperrrichtung betriebenen Solarzellen in Wärme kann zu einer Beschädigung des Moduls führen. Eine Beschädigung tritt typischerweise auf, wenn der in Sperrrichtung fließende Strom nicht flächig über die gesamte Fläche der Solarzelle oder zumindest eine große Fläche der Solarzelle fließt, sondern lediglich über lokale Bereiche der Solarzelle, die entsprechend eine hohe Stromdichte aufweisen und sich stark erhitzen (so genannte "Hot-Spots"). Insbesondere an solchen Hot-Spots kann aufgrund der großen Wärmeentwicklung die Solarzelle und/oder das Modul zerstört werden.

Bei der Herstellung von Solarzellenmodulen werden deshalb üblicherweise Bypassdioden angeordnet, welche elektrisch parallel zu den Strings verschaltet sind. Die Bypassdioden begrenzen die maximale Spannung in Sperrrichtung auf die Gesamtspannung aller nicht verschatteten Zellen im String zuzüglich der an der Bypassdiode anliegenden Spannung. Je kleiner die Anzahl an Solarzellen in einem String, desto kleiner ist die maximale Spannung, die an abgeschatteten Solarzellen- in Sperrrichtung anliegen kann, so dass insbesondere die Gefahr eines Durchbruchs und auch eines Leistungsverlustes bei Teilabschattung sinkt. Der Leistungsverlust bei Teilabschattung korreliert direkt mit der Anzahl der Solarzellen in einem String, sofern die abgeschattete Solarzelle, an welcher negative Spannung anliegt, nicht "durchbricht", d.h. in Sperrrichtung leitend wirkt, bevor eingebaute Bypassdioden schalten.

Typischerweise verringert sich die elektrische Ausgangsleistung des Moduls bei Teilabschattung mindestens um die Gesamtleistung des Strings mit Teilabschattung. Hinzu kommt gegebenenfalls eine Verringerung aufgrund eines Spannungsabfalls an einer Bypassdiode. Je weniger Solarzellen ein String aufweist, desto weniger Leistung verliert das Modul bei Teilabschattung eines Strings. Grundsätzlich gibt es jedoch immer einen Leistungsverlust bei Teilabschattung.

Um einen hohen Modulwirkungsgrad auch im Falle einer Teilabschattung des Moduls zu erzielen, wäre es daher optimal, jeder Solarzelle eine Bypassdiode elektrisch parallel zu schalten, so dass im Modul theoretisch eine Stringgröße von einer Solarzelle vorliegt. Aufgrund des hohen Herstellungsaufwandes und den entsprechend hohen Herstellungskosten ist dies jedoch nicht praktikabel.

Es ist daher bekannt, Dioden als eigenständige elektronische Bauteile immanent in einer Solarzelle auszubilden und entsprechend die positiven und negativen metallischen Kontakte der Solarzelle über diese Bypassdioden zu verschalten. Solche Solarzellen werden in US 5,616,185, WO 2010/029180 A1 und DE 10 2008 043 206 A1 beschrieben. Nachteilig hierbei ist, dass bei der Solarzellenherstellung erhebliche zusätzliche Verfahrensschritte, insbesondere Diffusionsschritte zur Herstellung der Bypassdiode in einem Halbleitersubstrat der Solarzelle notwendig sind. Entsprechend ergeben sich erheblich erhöhte Herstellungskosten für solche Solarzellen.

Bei den momentan industriell hergestellten Solarzellenmodulen werden daher standardmäßig Bypassdioden verbaut, welche parallel zu mehreren in Serie geschalteten Solarzellen (eines Strings) geschaltet sind. Industriestandard sind drei Bypassdioden pro Solarzellenmodul; dies bedeutet, dass ein String typischerweise jeweils zwischen 20 und 24 in Serie geschalteter Solarzellen aufweist. Hierdurch wird der Leistungsverlust bei Teilabschattung auf etwa 1/3 der Modulleistung (sofern nur Solarzellen eines Strings teilverschattet sind) begrenzt. Weiterhin wird die maximal in Rückwärtsrichtung an einer Solarzelle anliegende Spannung $V_{rev}$ maximal auf nachfolgende Summe begrenzt:

$$V_{rev} = \sum V_{nichtverschattete\ Solarzellen/String} + V_{Bypassdiode} \qquad (1),$$

d. h. entsprechend der Summe der Spannungen $V_{nichtverschattete\ Solarzellen/String}$ der nicht verschatteten Solarzellen des entsprechenden Strings und zuzüglich gegebenenfalls der Spannung $V_{Bypassdiode}$, einer diesen String zugeordneten Bypassdiode.

Um Solarzellen aufgrund ihrer möglichen Hot-Spot-Gefahr auszusortieren, wird von Modulherstellern teilweise als Eingangsspezifikation ein Stromkriterium unter Rückwärtsspannung angewendet. Das heisst, dass die zu verbauenden Solarzellen bei einer definierten Rückwärtsspannung einen gewissen Stromwert nicht überschreiten dürfen. Die Rückwärtsspannung wird gemäß der verwendeten Modularchitektur festgelegt und orientiert sich in der Regel an Gleichung (1). Demzufolge ist der Strom bei einer definierten Rückwärtsspannung auch ein Klassierkriterium bei der Ausgangskontrolle vieler Solarzellenfertigungslinien.

Bei Solarzellen aus multikristallinem Silizium findet bei Rückwärtsspannungen kleiner als der eigentlich erwarteten Durchbruchspannung für Silizium ein Durchbruch der Raumladungszone statt. Mögliche Ursachen für diese verringerte Durchbruchspannung werden ausführlich in der Literatur diskutiert (z. B Breitenstein, O., J. Bauer, J.-M. Wagner, N. D. Zakharov, H. Blumtritt, A. Lotnyk M. Kasermann, W. Kwapil, and W. Warta; Defecf-induced breakdown in multicrystalline silicon solar cells; IEEE Transactions on Electron Devices *57* (9), p 2227-2234 (2010) ). Findet der Durchbruch bei Spannungen kleiner der definierten Rückwärts-Testspannung statt, so weisen diese Solarzellen einen erhöhten Strom auf und werden aussortiert. Der Stand der Technik ist, die Durchbruchspannung in Solarzellen aus multikristallinem Silizium soweit zu erhöhen, dass die Solarzellen bei Teilverschattung in einem standardmäßig mit Bypassdioden versehenem industriellem Modul nicht durchbrechen. Es wird postuliert, dass die Durchbrüche zu Hot-Spots im Modul führen können, welche Hot-Spots ein hohes Beschädigungsrisiko für das Moduls darstellen.

Eine Erhöhung der Durchbruchspannung bei einer Solarzelle wird beispielsweise in DE 10 2008 043 458 A1 vorgeschlagen. Weiterhin wird in DE 10 2009 034 317 A1 bei Solarzellen, welche aus umg-Silizium hergestellt werden, eine Erhöhung der Durchbruchspannung vorgeschlagen.

Ein Prüfverfahren für PV-Module ist aus der Norm IEC 61 215 bekannt, insbesondere ein Leistungstest (siehe Abschnitt 10.2) und ein Hitzeentwicklungstest (siehe Abschnitt 10.9).

Ausgehend hiervon liegt der vorliegenden Erfindung die Aufgabe zugrunde, die Bandbreite der in einem Solarzellenmodul wirtschaftlich sinnvoll einsetzbaren Solarzellen zu erweitern, insbesondere, ein Gütekriterium für Solarzellen zu schaffen, so dass der Ausschuss einer industriellen Produktionslinie von Solarzellen verringert wird und/oder die Gefahr einer Hot-Spot-Bildung in Solarzellenmodulen verringert wird und/oder ausgehend von an sich bekannten Verfahren zur Herstellung von Solarzellen ein Herstellungsverfahren für Solarzellen vorzuschlagen, welches zu einer Vermeidung von Hot-Spots in einem Modul und/oder zu einer Vereinfachung der Modulstruktur führt.

Gelöst ist diese Aufgabe durch ein Verfahren zur Qualitätsprüfung einer photovoltaischen Solarzelle gemäß Anspruch 1, durch die Verwendung einer photovoltaischen Solarzelle in einem Solarzellenmodul gemäß Anspruch 6, durch ein Solarzellenmodul gemäß Anspruch 7 und ein Verfahren zur Herstellung einer photovoltaischen Solarzelle gemäß Anspruch 10. Vorzugsweise Ausführungsformen des Verfahrens zur Qualitätsprüfung finden sich in den Ansprüchen 2 bis 5, des Solarzellenmoduls in den Ansprüchen 8 bis 9 und des Verfahrens zur Erstellung einer photovoltaischen Solarzelle in den Ansprüchen 11 bis 14. Hiermit wird der Wortlaut der Ansprüche durch ausdrückliche Bezugnahme in die Beschreibung aufgenommen.

Die vorliegende Erfindung ist in der Erkenntnis des Anmelders begründet, dass es überraschenderweise und im Gegensatz zu der vorherrschenden Meinung sinnvoll ist, gezielt Solarzellen auszuwählen, welche eine erniedrigte Durchbruchspannung besitzen und deshalb unter Teilabschattungsbedingungen im Modul "durchbrechen" (d.h. in Sperrichtung elektrisch leiten), bevor standardmäßig verbaute Bypassdioden schalten. Im Gegensatz zu dem standardmäßigen Ansatz, die Durchbruchspannung von Solarzellen soweit wie möglich zu erhöhen, soll diese gezielt verringert werden.

Die gezielt ausgewählten Solarzellen haben vorzugsweise folgende Charakteristika:

- Die Solarzellen brechen unter Rückwärtsspannung durch, bevor eine standardmäßig im selben String verbaute Bypassdiode schalten würde, d.h. vorzugsweise liegt die Durchbruchspannung unter dem in Gleichung (1) definierten Wert und die Solarzelle leitet bei einer in Rückwärtsrichtung anliegenden Spannung, welche definiert wird durch die Summe der Spannungen am optimalen Arbeitspunkt der nichtverschatteten Solarzellen des Strings, im Dunkeln einen Strom, der größer ist als der am optimalen Arbeitspunkt fließende Strom der Serienschaltung der nicht verschatteten Solarzellen des Strings.

Sofern ein typisches Verwendungsszenario der Solarzellen eine häufige Abschattung von mehreren Solarzellen beinhaltet ist es vorteilhaft, die vorgenannte Durchbruchspannung geringer zu wählen, bevorzugt die vorgenannte Durchbruchspannung mit einem Faktor $1/n_{ab}$ zu multiplizieren, wobei $n_{ab}$ die Anzahl der bei typischer Verwendung und Auftreten einer Abschattung typischerweise abgeschatteten Solarzellen eines Strings angibt, bzw. die Anzahl abgeschatteter- Solarzellen in einem String, bei deren Abschattung ein Leistungsverlust bei Verwendung gemäß Vorgabe vermieden werden soll. Vorzugsweise wird in diesem und in den folgenden Fällen bei Verwendung der Anzahl $n_{ab}$ auch mindestens eine Anzahl $n_{ab}$ von solchen Solarzellen in dem String verwendet.

Der Faktor $n_{ab}$ wird im Folgenden stets in dieser Bedeutung verwendet, d.h. gemäß der oben genannten Definition und gemäß der bevorzugten Verwendung von mindestens $n_{ab}$ Solarzellen, die dieses Kriterium erfüllen, in dem String.

- Die Solarzellen weisen keine erheblichen Shunts bzw. andere Beeinträchtigung des Vorwärtsverhaltens auf. Dieses Kriterium ist in der Regel erfüllt, wenn die Solarzelle unter Standardtestbedingungen eine vorgegebene elektrische Mindestleistung erbringt.

- Die Solarzellen verursachen keine Hot-Spots, da die Durchbrüche flächig verteilt sind und nicht zu einer kritischen lokal erhöhten Temperatur führen.

Werden ausschließlich solche Solarzellen für den Modulbau verwendet, geht bei Teilabschattung einer Solarzelle nicht die gesamte Leistung eines Stringes verloren, sondern lediglich die Leistung der Solarzellen, welche benötigt werden, um die Durchbruchspannung der verschatteten Solarzelle bereitzustellen. Die Folge ist ein geringerer Leistungsverlust des Modules bei Teilabschattung einzelner Solarzellen. Da die Aktivierungsspannung der standardmäßig eingebauten Bypassdioden in den meisten Fällen ohnehin nicht erreicht wird, können somit auch die Bypassdioden eingespart werden.

Durch eine flächige Verteilung der Durchbrüche über die gesamte Zellfläche führt eine Teilabschattung der ausgewählten Solarzellen nicht zu Hot-Spots im Modul. Diese Erfindung widerlegt somit das Vorurteil, dass Solarzellen mit einem erhöhten Rückwärtsstrom bei einer definierten Rückwärtsspannung im Bereich der Aktivierungsspannung der Bypassdioden aussortiert werden müssen. Im Speziellen wird widerlegt, dass Durchbrüche bei multi-kristallinen Silizium-Solarzellen zu vermeiden sind, sondern sich im Gegenteil vorteilhaft auf die Leistungsausbeute bei Teilabschattung auswirken, ohne das Modul durch Hot-Spots zu beschädigen.

In einem ersten Aspekt der vorliegenden Erfindung wird ein Verfahren zur Qualitätsprüfung einer photovoltaischen Solarzelle vorgeschlagen. Das Verfahren umfasst folgende Verfahrensschritte:

a. Durchführen eines Leistungstests, indem die Solarzelle mit Licht, vorzugsweise mit einem vorgegebenen Spektrum und/oder einer vorgegebenen Intensität, beaufschlagt wird und gemäß eines Prüfkriteriums A geprüft wird, ob zumindest eine vorgegebene elektrische Mindestleistung $P_{Min}$ abgreifbar ist,

b. Durchführen eines Hitzeentwicklungstests, indem die Solarzelle mit einer vorgegebenen Hitzeentwicklungs-Spannung $V_{HE}$ in Rückwärtsrichtung beaufschlagt wird oder die Solarzelle derart mit Spannung in Rückwärtsrichtung beaufschlagt wird, dass ein vorgegebener Hitzeentwicklungs-Strom $I_{HE}$ fließt,
und gemäß eines Prüfkriteriums B geprüft wird, ob die Solarzellenoberfläche eine vorgegebene Grenztemperatur $T_{GR}$ nicht übersteigt oder gemäß eines theoretischen Voraussagemodells bei Einstellen eines Wärmegleichgewichts nicht übersteigen würde.

Diese Verfahrensschritte bzw. Prüfkriterien A und B sind bereits aus der Auswahl von Solarzellen bei der industriellen Herstellung bekannt. Insbesondere Prüfkriterium A wird typischerweise als "Binning" bzw. Klassieren am Ende der Solarzellenfertigung bezeichnet. Typischerweise erfolgt die Prüfung unter der Norm STC (25°C/1 Sonne Beleuchtungsintensität).

Die elektrische Mindestleistung $P_{Min}$ wird dabei in an sich bekannter Weise gewählt. Insbesondere liegt es im Rahmen der Erfindung, als $P_{Min}$ 50%, bevorzugt 75%, weiter bevorzugt 90% der durchschnittlich für diesen Solarzellentyp bzw. mit der diesen Typ herstellenden Prozesslinie erzielten Leistung unter Standardbedingungen vorzugeben.

Wesentlich ist, dass zusätzlich in einem Verfahrensschritt c. ein Durchbruchstest durchgeführt wird, indem die Solarzelle mit einer vorgegebenen Durchbruchs-Spannung $V_{DB}$ in Rückwärtsrichtung beaufschlagt wird und gemäß eines Prüfkriteriums C geprüft wird, ob bei Beaufschlagung mit der vorgegebenen Durchbruchsspannung zumindest ein Strom größer oder gleich eines vorgegebenen Mindestdurchbruchsstroms $I_{DB}$ fließt. Die Durchbruchsspannung $V_{DB}$ orientiert sich typischerweise an dem in Gleichung (1) definierten Wert bzw. wie weiter unten erläutert bei dem in Gleichung (1) definierten Wert, geteilt durch $n_{ab}$. Typische Werte für die Durchbruchsspannung $V_{DB}$ sind im Fall von Standard-Silizium-Solarzellen (AI-BSF mit Standardprozess für Industrieanwendungen) etwa -15 V (bei 24 Zellen je String), etwa -12 V (bei 20 Zellen je String) oder -10 V.

Die vorgenannten Kriterien für eine vorzugsweise Wahl der Durchbruchsspannung $V_{DB}$ gehen von einem typischen Szenario aus, bei welchem in der Mehrzahl der Fälle lediglich eine Solarzelle abgeschattet wird. Muss hingegen davon ausgegangen werden, dass häufig zwei oder mehr Solarzellen abgeschattet werden, so wird vorzugsweise die Durchbruchsspannung $V_{DB}$ mit einem betragsmäßig kleineren Wert verglichen mit den zuvor angegebenen Werten gewählt. In einer vorzugsweisen Ausführungsform werden die vorgenannten Werte um die Anzahl der typischerweise abgeschatteten Solarzellen geteilt. Geht man somit von einer Anzahl $n_{ab}$ von bei Auftreten einer Abschattung typischerweise abgeschatteten Solarzellen aus, bzw. der Anzahl von Solarzellen in einem String, bei deren Abschattung gemäß Vorgabe kein erheblicher Leistungseinbruch erfolgen soll, so orientiert sich die Durchbruchsspannung $V_{DB}$ typischerweise an dem in Gleichung (1) definierten Wert, welcher durch $n_{ab}$ geteilt wird: $V_{REV}/n_{ab}$. Entsprechend ergeben sich typische Werte bei Standard-SiliziumSolarzellen von -15 $V/n_{ab}$ (bei 24 Zellen je String etwa -12 $V/n_{ab}$ (bei 20 Zellen je String) oder -10 $V/n_{ab}$.

Hierbei liegt es im Rahmen der Erfindung, hinsichtlich des Durchbruchstests gleichwirkende Kriterien zu verwenden, beispielsweise, dass bei Anstreben einer vorgegebenen Durchbruchspannung sich ergibt, dass die Solarzelle bereits bei geringeren Spannungen ein Stromlimit erreicht. Dadurch ist ebenfalls gewährleistet, dass die tatsächliche Durchbruchspannung der Solarzelle kleiner der vorgegebenen Durchbruchspannung ist. Gleichwirkend ist somit ein Prüfkriterium C', indem geprüft wird, ob bei Beaufschlagen der Solarzelle mit Spannung in Rückwärtsrichtung bereits bei einer Spannung kleiner einer als maximal definierten Durchbruchspannung $V_{DB,max}$ ein vorgegebener Mindestdurchbruchstrom $I_{DB}$ fließt. Dieser orientiert sich vorzugsweise am IMPP des Moduls.

Das erfindungsgemäße Verfahren zur Qualitätsprüfung weist somit entgegen der vorherrschenden Meinung ein Prüfkriterium auf, dass eine niedrige Durchbruchsspannung gegeben ist, das heißt, dass bei der vorgegebenen Durchbruchs-Spannung $V_{DB}$ zumindest ein vorgegebener Mindestdurchbruchsstrom $I_{DB}$ fließt bzw. ein hierzu gleichwirkendes Kriterium.

Die Qualitätsprüfung gemäß dem erfindungsgemäßen Verfahren zur Qualitätsprüfung betrifft somit gerade solche Solarzellen, die bisher als "Ausschuss" ausgesondert und insbesondere nicht in einem Photovoltaikmodul mit standardmäßiger Bypassdiodenverschaltung verwendet wurden. Aufgrund der Erkenntnis des Anmelders, dass überraschenderweise jedoch gerade solche Solarzellen vorteilhaft in einem Solarzellenmodul einsetzbar sind, wie vorhergehend ausgeführt, wird durch das erfindungsgemäße Verfahren eine Qualitätsprüfung bereitgestellt, die den Ausschuss einer Solarzellenproduktionslinie erheblich verringert und/oder die Produktion von Solarzellenmodulen mit einem erheblich verringerten Risiko der Hot-Spot-Bildung bei Teilabschattung und/oder die Produktion günstigerer Photovoltaikmodule aufgrund der Einsparung von Bypassdioden und/oder die Realisierung neuer Moduldesigns, welche nicht durch eine Maximalzahl an Zellen pro String limitiert sind, ermöglicht.

Darüber hinaus entsprechen dem erfindungsgemäßen Verfahren zur Qualitätsprüfung auch solche Solarzellen, die bisher als aufgrund einer niedrigen Durchbruchspannung nicht rentabel angesehen wurden. Dies betrifft insbesondere Solarzellen aus umg-Si Material und/oder Solarzellen mit einer verglichen zum heutigen Standard höheren Basisdotierung insbesondere bei Verwendung eines multikristallinen Siliziumwafers zur Herstellung der Solarzelle.

Vorzugsweise wird bei dem erfindungsgemäßen Verfahren zur Qualitätsprüfung der Solarzelle daher ein Gütekriterium I zugeordnet, bei Bestehen zumindest der Prüfkriterien A und B und C.

Solarzellen dieses neu geschaffenen Gütekriteriums I ermöglichen somit wie zuvor ausgeführt die Einsparung von Bypassdioden, eine erhöhte Leistungsausbeute in einem Solarzellenmodul bei Teilabschattung und/oder die Realisierung neuartiger Moduldesigns, welche nicht durch eine maximale Anzahl an Solarzellen pro String limitiert sind und/oder die Verwendung bisher als nicht einsetzbar erachteter Materialien, wie beispielsweise umg-Silizium oder bisher als unwirtschaftlich erachteter hoher Basisdotierungen, insbesondere bei Solarzellen aus multikristallinem Silizium.

Sofern primär die Ausbeute einer Produktionslinie zur Herstellung von Solarzellen erhöht werden soll, ist es vorteilhaft, die bereits nach bisher geltenden Kriterien verwendbaren Solarzellen zusätzlich zu den Solarzellen gemäß Gütekriterium I zur Herstellung eines Solarzellenmoduls zu verwenden:

Vorzugsweise wird bei dem erfindungsgemäßen Verfahren zur Qualitätsprüfung einer Solarzelle ein Gütekriterium II zugeordnet, wenn zumindest eine der beiden folgenden Bedingungen erfüllt wird:

- Bestehen zumindest der Prüfkriterien A und B und C (Gütekriterium I),

- Bestehen zumindest der Prüfkriterien A und B und bestehen eines Prüfkriteriums D, wobei in einem Verfahrensschritt d. ein Nichtdurchbruchstest durchgeführt wird, indem die Solarzelle mit einer Vorgegebenen Nichtdurchbruchsspannung $V_{NDB}$ in Rückwärtsrichtung beaufschlagt wird und gemäß Prüfkriterium D geprüft wird, ob bei Beaufschlagung mit der vorgegebenen Nichtdurchbruchsspannung ein Strom kleiner oder gleich eines vorgegebenen Maximalstromes $I_{NDB}$ fließt.

Das Gütekriterium II umfasst somit solche Solarzellen, die auch nach vorbekannten Kriterien zur Qualitätsprüfung bereits zur Verwendung in einem Solarzellenmodul zugelassen wurden. Kriterium D wird bei der industriellen Fertigung häufig als "Rückwärtsstrom-Kriterium" bezeichnet. Dieser Begriff ist gängig, jedoch irreführend, da gemäß Prüfungsbedingungen bei Kriterium D der Stromfluss nicht in eine "Rückwärtsrichtung" fließt, sondern in die gleiche Richtung wie der Photostrom.

Zusätzlich umfasst Gütekriterium II jedoch auch die Solarzellen gemäß Gütekriterium I wie zuvor ausgeführt, so dass verglichen mit den bisher durchgeführten Qualitätsprüfungen weniger Solarzellen als Ausschuss ausgesondert werden und sich somit die Ausbeute einer Produktionslinie bei der Herstellung von Solarzellen erhöht. Sofern bei der Herstellung eines Solarzellenmoduls mit Solarzellen des Gütekriteriums II in einem String mindestens eine Solarzelle der zweiten Bedingung eingesetzt wird, ist die Anordnung einer Bypassdiode an diesen String in an sich bekannter Weise sinnvoll, um bei Abschattung dieser Solarzellen eine mögliche Hot-Spot-Entwicklung und einen erhöhten Leistungsverlust des Moduls zu vermeiden.

Vorzugsweise ist die Solarzelle bei dem erfindungsgemäßen Verfahren zur Qualitätsprüfung zur Anordnung in einem Solarzellenmodul vorgesehen, bei welchem Solarzellenmodul die Solarzellen in Strings mit jeweils einer Anzahl von $n_{st}$ Solarzellen angeordnet sind. Hierbei sind die Solarzellen vorzugsweise derart gewählt, dass in Verfahrensschritt c der Mindestdurchbruchsstrom $I_{DB}$ größer oder gleich, vorzugsweise gleich dem Strom des Solarzellenmoduls am optimalen Arbeitspunkt des Solarzellenmoduls gewählt wird und/oder dass die Durchbruchs-Spannung $V_{DB}$ betragsmäßig kleiner oder gleich, vorzugsweise gleich der Summe der Spannungen $V_{mpp}$ der nicht verschatteten Solarzellen des Strings am jeweils optimalen Arbeitspunkt der Solarzellen gewählt wird, bevorzugt den vorgenannten Wert geteilt durch $n_{ab}$. Hierdurch wird die Abgrenzung des Prüfkriteriums C optimiert. Insbesondere sind die Solarzellen vorzugsweise derart gewählt, dass bei Anliegen einer Spannung $V_{DB'}$ in Rückwärtsrichtung an der Solarzelle, welche Spannung die Summe der Spannungen $V_{inpp}$ am optimalen Arbeitspunkt der verbleibenden Solarzellen im String darstellt, bevorzugt bei Anliegen einer Spannung $V_{DB}/n_{ab}$ in *Rückwärtsrichtung an der Solarzelle,* mindestens ein Strom fließt, der dem Strom $I_{mpp}$ des Strings am optimalen Arbeitspunkt entspricht. Ein alternatives, gleich wirkendes Kriterium ist, dass der vorgenannte Strom $I_{mpp}$ bei Beaufschlagen der Solarzelle mit einer Spannung in Rückwärtsrichtung fließt, welche Spannung kleiner oder gleich der vorgenannten Summe der Spannungen $V_{mpp}$ ist, bevorzugt welche Spannung kleiner oder gleich der vorgenannten Summe der Spannungen $V_{mpp}$ geteilt durch $n_{ab}$ ist.

Weiterhin ist es vorteilhaft, dass in Verfahrensschritt b die Grenztemperatur $T_{GR}$ kleiner 300°C, vorzugsweise im Bereich 100°C bis 250°C, weiter bevorzugt im Bereich 130°C bis 180°C gewählt wird. Hierdurch wird bei typischen Solarzellenmodulen eine Beschädigung des Solarzellenmoduls durch Temperatureinwirkung vermieden.

Die zuvor erläuterte Erkenntnis des Anmelders widerlegt somit das bisher herrschende Vorurteil, dass Solarzellen mit niedriger Durchbruchspannung als Ausschuss auszusondern sind. Ein weiterer Aspekt der vorliegenden Erfindung betrifft daher die Verwendung einer photovoltaischen Solarzelle in einem Solarzellenmodul, welche Solarzelle zumindest das Prüfkriterium C gemäß Anspruch 1, vorzugsweise die Prüfkriterien A und C gemäß Anspruch 1, weiter bevorzugt Gütekriterium I gemäß Anspruch 2 erfüllt.

Ein weiterer Aspekt der vorliegenden Erfindung betrifft ein Solarzellenmodul, umfassend eine Mehrzahl elektrisch miteinander verbundener photovoltaischer Solarzellen, wobei das Solarzellenmodul ausschließlich Solarzellen umfasst, welche Solarzellen das Gütekriterium I gemäß Anspruch 2 und/oder das Gütekriterium II gemäß Anspruch 3 erfüllen. Ein solches Solarzellenmodul weist den Vorteil auf, dass zumindest bei Abschattung der Solarzellen gemäß Gütekriterium I ein geringerer Leistungsabfall verglichen mit vorbekannten Solarzellenmodulen erfolgt.

Vorzugsweise sind die Solarzellen in Strings angeordnet und mindestens ein String des Solarzellenmoduls umfasst ausschließlich Solarzellen, welche das Gütekriterium I gemäß Anspruch 2 erfüllen. Hierdurch erfolgt in diesem String bei Teilabschattung ein geringerer Leistungsabfall verglichen mit vorbekannten Solarzellenmodulen und es kann zumindest für diesen String auf eine Bypassdiode verzichtet werden. Insbesondere ist es daher vorteilhaft, dass diesem String keine Bypassdiode zugeordnet ist. Hierdurch werden Kosten bei der Modulherstellung eingespart.

In dieser Anmeldung ist der Begriff "String" eines Moduls wie üblich definiert, d.h. typischerweise werden die einer Bypassdiode zugeordneten Solarzellen begrifflich als String zusammengefasst. Sofern eine Untermenge der Solarzellen des Moduls, welche Solarzellen der Untermenge in Serie verschaltet sind, keine Bypassdiode zugeordnet ist, ist diese Untermenge analog ebenfalls als String zu bezeichnen. Sofern alle Solarzellen des Moduls in Serie verschaltet sind und das Modul keine Bypassdiode umfasst, weist das Modul somit lediglich einen String auf, welchem String alle (in Serie verschalteten) Solarzellen des Moduls zugeordnet sind.

In einer weiteren vorzugsweisen Ausführungsform des erfindungsgemäßen Solarzellenmoduls erfüllen sämtliche Solarzellen des Moduls das Gütekriterium I gemäß Anspruch 2. In dieser vorteilhaften Ausführungsform weist somit das gesamte Solarzellenmodul die zuvor genannten Vorteile auf. Insbesondere ist es daher vorteilhaft, dass das Solarzellenmodul keine elektrisch mit den Solarzellen verbundene Bypassdiode aufweist bzw. einem hierzu gleich wirkenden Kriterium wie zuvor ausgeführt entspricht. Besonders vorteilhaft ist hierbei, dass keine Notwendigkeit der Anordnung der Solarzellen des Moduls in herkömmlichen Strings besteht. Vorzugsweise sind sämtliche Solarzellen des Moduls elektrisch in Serie verschaltet, so dass neuartige Moduldesigns nicht limitiert werden.

Die vorliegende Erfindung erlaubt somit das Erstellen von Solarzellenmodulen, bei denen gegenüber den vorbekannten Modulbauweisen Bypassdioden eingespart werden können oder sogar vollständig auf Bypassdioden verzichtet werden kann. Aufgrund der geringen Durchbruchspannung wird bei Solarmodulen gemäß der erfindungsgemäßen Lehre stets eine Beschädigung des Moduls aufgrund hoher lokaler Ströme und entsprechend hoher lokaler Wärmeentwicklung (so genannte "HotSpots") vermieden. Darüber hinaus wird in typischen Fällen ein Leistungsverlust bei Teilabschattung vermieden. Es liegt daher im Rahmen der Erfindung, Solarzellen gemäß der erfindungsgemäßen Lehre mit Bypassdioden in einem String zu kombinieren, um für vorgegebene typische Abschattungsszenarien einen möglichst geringen Leistungsverlust zu erzielen. Besonders vorteilhaft ist jedoch, mehrere Solarzellen oder vorzugsweise alle Solarzellen des Strings gemäß der erfindungsgemäßen Lehre auszuführen, um auch ohne Verwendung einer Bypassdiode bei Teilabschattung auch von mehreren Solarzellen einen möglichst geringen Leistungsverlust zu erzielen.

Wie zuvor ausgeführt, widerlegt die der Erfindung zugrunde liegende Erkenntnis des Anmelders das Vorurteil, dass Solarzellen mit niedriger Durchbruchspannung als Ausschuss auszusondern sind. Vielmehr ist es sogar vorteilhaft, Solarzellen insbesondere gemäß Gütekriterium I in einem Solarzellenmodul zu verwenden, da die Leistungsausbeute bei Teilabschattung erhöht und die Gefahr von Hot-Spots verringert wird. In einem weiteren Aspekt der vorliegenden Erfindung wird daher ein Verfahren zur Herstellung einer photovoltaischen Solarzelle vorgeschlagen, umfassend das Bereitstellen mindestens eines Basisbereichs mit einer Basisdotierkonzentration und mindestens eines Emitterbereichs, derart, dass ein pn- und/oder pin-Übergangs zwischen Basis- und Emitterbereich ausgebildet wird. Wesentlich ist, dass zumindest die Basisdotierkonzentration derart gewählt wird, dass die Solarzelle das Gütekriterium I gemäß Anspruch 2 erfüllt.

Durch Anpassung und durch geeignete Wahl zumindest der Basisdotierkonzentration kann somit bei typischen, vorbekannten Solarzellenstrukturen die elektrische Eigenschaft der Solarzelle verändert werden, so dass die Solarzelle Gütekriterium I erfüllt. Dies wird typischerweise dadurch erreicht, dass ausgehend von einer an sich bekannten Solarzellenstruktur die Basisdotierkonzentration erhöht wird, derart, dass Gütekriterium I erfüllt wird. Dies ist insbesondere bei Siliziumsolarzellen und hierbei insbesondere bei so genannten "bulk"-Solarzellen, d. h. Solarzellen, welche ausgehend von einem Siliziumsubstrat hergestellt werden, vorteilhaft.

Untersuchungen des Anmelders haben ergeben, dass insbesondere bei Solarzellen basierend auf einem Halbleitersubstrat ausgehend von einem multikristallinen Siliziumwafer das erfindungsgemäße Verfahren zur Herstellung einer photovoltaischen Solarzelle vorteilhaft ist. Da insbesondere bei multikristallinem Silizium und typischer vorbekannter Solarzellenstrukturen eine Erhöhung der Basiskonzentration derart wählbar ist, dass die Solarzelle das Gütekriterium I erfüllt.

Weiterhin ergaben Untersuchungen des Anmelders, dass insbesondere die Verwendung von umg-Silizium zur Anwendung des erfindungsgemäßen Verfahrens zur Herstellung einer photovoltaischen Solarzelle geeignet ist, da auch bei diesem Material durch geeignete Wahl der Basisdotierkonzentration ein erfüllen des Gütekriterium 1 erzielt wird.

Vorzugsweise ist das erfindungsgemäße Herstellungsverfahren einer photovoltaischen Solarzelle daher gemäß eines an sich bekannten Verfahrens zur Herstellung einer photovoltaischen Solarzelle ausgebildet, wobei zumindest die Basis mit einem Vergleich zu dem vorbekannten Verfahren höheren Basisdotierkonzentration ausgebildet wird, derart, dass die Solarzelle Gütekriterium I erfüllt.

Vorzugsweise wird die Basisdotierung derart gewählt, dass die Basis einen Basiswiderstand < 0,8 Ohmcm, wie im Anspruch 14, bevorzugt < 0,7 Ohmcm, weiter bevorzugt < 0,5 Ohmcm aufweist.

Vorgenannte Werte sind insbesondere bei der Ausbildung der Solarzelle ausgehend von einem multikristallinen Siliziumwafer vorteilhaft.

**Patentansprüche**

1. Verfahren zur Qualitätsprüfung einer photovoltaischen Solarzelle, folgende Verfahrensschritte umfassend:

   a. Durchführen eines Leistungstests, indem die Solarzelle mit Licht beaufschlagt wird und gemäß eines Prüfkriteriums A geprüft wird, ob zumindest eine vorgegebene elektrische Mindestleistung $P_{Min}$ abgreifbar ist, wobei $P_{Min}$ zumindest 50% der durchschnittlich für diesen Solarzellentyp oder mit der diesen Typ herstellenden Prozesslinie erzielten Leistung unter Standardbedingungen beträgt,

   b. Durchführen eines Hitzeentwicklungstests, indem die Solarzelle mit einer vorgegebenen Hitzeentwicklungs-Spannung $V_{HE}$ in Rückwärtsrichtung beaufschlagt wird oder die Solarzelle derart mit Spannung in Rückwärtsrichtung beaufschlagt wird, dass ein vorgegebener Hitzeentwicklungs-Strom $I_{HE}$ fließt, und indem gemäß eines Prüfkriteriums B geprüft wird, ob die Solarzellenoberfläche eine vorgegebene Grenztemperatur $T_{GR}$ nicht übersteigt oder gemäß eines theoretischen Voraussagemodells bei Einstellen eines Wärmegleichgewichts nicht übersteigen würde,

   **dadurch gekennzeichnet,**
   **dass** zusätzlich in einem Verfahrensschritt c. ein Durchbruchstest durchgeführt wird, indem die Solarzelle mit einer vorgegebenen Durchbruchs-Spannung $V_{DB}$ in Rückwärtsrichtung beaufschlagt wird und gemäß eines Prüfkriteriums C geprüft wird, ob bei Beaufschlagung mit der vorgegebenen Durchbruchspannung zumindest ein Strom größer oder gleich eines vorgegebenen Mindestdurchbruchstroms $I_{DB}$ fließt und/oder geprüft wird, ob bei Beaufschlagen der Solarzelle mit Spannung in Rückwärtsrichtung bereits bei einer Spannung kleiner einer als maximal definierten Durchbruchspannung $VD_{B,max}$ ein vorgegebener Mindestdurchbruchstrom $I_{DB}$ fließt.

2. Verfahren nach Anspruch 1,
   **dadurch gekennzeichnet,**
   **dass** ein Gütekriterium I der Solarzelle zugeordnet wird bei Bestehen zumindest der Prüfkriterien A und B und C.

3. Verfahren nach einem der vorangegangenen Ansprüche,
   **dadurch gekennzeichnet,**
   **dass** ein Gütekriterium II der Solarzelle zugeordnet wird, wenn zumindest eine der beiden folgenden Bedingungen erfüllt wird:

   - Bestehen zumindest der Prüfkriterien A und B und C,
   - Bestehen zumindest der Prüfkriterien A und B und bestehen eines Prüfkriteriums D, wobei in einem Verfahrensschritt d. ein Nichtdurchbruchstest durchgeführt wird, indem die Solarzelle mit einer vorgegebenen Nichtdurchbruchspannung $V_{NDB}$ in Rückwärtsrichtung beaufschlagt wird und gemäß Prüfkriterium D geprüft wird, ob bei Beaufschlagung mit der vorgegebenen Nichtdurchbruchspannung ein Strom kleiner oder gleich eines vorgegebenen Maximalstromes $I_{NDB}$ fließt.

4. Verfahren nach einem der vorangegangenen Ansprüche,
   **dadurch gekennzeichnet,**
   **dass** die Solarzelle zur Anordnung in einem Solarzellenmodul vorgesehen ist, bei welchem Solarzellenmodul die Solarzellen in Strings mit jeweils einer Anzahl von $n_{st}$ Solarzellen angeordnet werden und dass in Verfahrensschritt c der Mindestdurchbruchstrom $I_{DS}$ größer oder gleich, vorzugsweise gleich dem Strom des Solarzellenmoduls am optimalen Arbeitspunkt gewählt wird
   und/oder
   **dass** die Durchbruchs-Spannung $V_{DB}$ betragsmäßig kleiner oder gleich, vorzugsweise gleich der Summe der Spannungen $V_{mpp}$ der Solarzellen des Strings am jeweils optimalen Arbeitspunkt der Solarzellen gewählt wird, bevorzugt, dass die Durchbruchs-Spannung $V_{DB}$ betragsmäßig kleiner oder gleich, vorzugsweise gleich der Summe der Spannungen $V_{mpp}$ der Solarzellen des Strings am jeweils optimalen Arbeitspunkt der Solarzellen multipliziert mit einem Faktor $1/n_{ab}$ gewählt wird, wobei $n_{ab}$ die Anzahl der bei typischer Verwendung unf Auftreten einer Abschattung typischerweise abgeschatteten Solarzellen eines Strings angibt oder die Anzahl abgeschatteter Solarzellen in einem String, bei deren Abschattung ein Leistungsverlust bei Verwendung gemäß Vorgabe vermieden werden soll.

**5.** Verfahren nach einem der vorangegangenen Ansprüche,
**dadurch gekennzeichnet,**
**dass** in Verfahrensschritt b die Grenztemperatur $T_{GR}$ kleiner 300°C, vorzugsweise im Bereich 100°C bis 250°C, weiter bevorzugt im Bereich 130°C bis 180°C gewählt wird.

**6.** Verwendung einer photovoltaischen Solarzelle in einem Solarzellenmodul,
welche Solarzelle zumindest das Prüfkriterium C gemäß Anspruch 1, vorzugsweise die Prüfkriterien A und C gemäß Anspruch 1, weiter bevorzugt Gütekriterium I gemäß Anspruch 2 erfüllt.

**7.** Solarzellenmodul,
umfassend eine Mehrzahl elektrisch miteinander verbundener photovoltaischer Solarzellen,
**dadurch gekennzeichnet,**
**dass** das Solarzellenmodul ausschließlich Solarzellen umfasst, welche Solarzellen das Gütekriterium I gemäß Anspruch 2 und/oder das Gütekriterium II gemäß Anspruch 3 erfüllen.

**8.** Solarzellenmodul nach Anspruch 7,
**dadurch gekennzeichnet,**
**dass** die Solarzellen in Strings angeordnet sind und mindestens ein String des Solarzellenmoduls ausschließlich Solarzellen umfasst, welche das Gütekriterium I gemäß Anspruch 2 erfüllen, vorzugsweise,
**dass** diesem String keine Bypassdiode zugeordnet ist.

**9.** Solarzellenmodul nach einem der Ansprüche 7 bis 8,
**dadurch gekennzeichnet,**
**dass** sämtliche Solarzellen des Moduls das Güterkriterium I gemäß Anspruch 2 erfüllen, vorzugsweise,
**dass** das Solarzellenmodul keine elektrisch mit den Solarzellen verbundene Bypassdiode aufweist.

**10.** Verfahren zur Herstellung einer photovoltaischen Solarzelle,
umfassend das Bereitstellen mindestens eines Basisbereichs mit einer Basisdotierkonzentration und mindestens eines Emitterbereichs, derart, dass ein pn- und/oder pin-Übergangs zwischen Basis- und Emitterbereich ausgebildet wird,
**dadurch gekennzeichnet,**
**dass** die Basisdotierkonzentration derart gewählt wird, dass die Solarzelle das Gütekriterium I gemäß Anspruch 2 erfüllt.

**11.** Verfahren nach Anspruch 10,
**dadurch gekennzeichnet,**
**dass** das Herstellungsverfahren grundsätzlich gemäß eines an sich bekannten Verfahrens zur Herstellung einer photovoltaischen Solarzelle ausgebildet ist,
wobei zumindest die Basis mit einer im Vergleich zu dem vorbekannten Verfahren höheren Basisdotierkonzentration ausgebildet wird.

**12.** Verfahren nach einem der vorangegangenen Ansprüche 10 bis 11,
**dadurch gekennzeichnet,**
**dass** zumindest die Basis in einem Siliziumsubstrat ausgebildet wird, vorzugsweise dass Basis und Emitter in dem Siliziumsubstrat ausgebildet werden

**13.** Verfahren nach Anspruch 12,
**dadurch gekennzeichnet,**
**dass** das Siliziumsubstrat ein multikristalliner Siliziumwafer ist.

**14.** Verfahren nach Anspruch 13,
**dadurch gekennzeichnet,**
**dass** die Basisdotierung kleiner 0,8 Ohmcm, bevorzugt kleiner 0,7 Ohmcm, weiter bevorzugt kleiner 0,5 Ohmcm ausgebildet wird.

**Claims**

1. Method for testing the quality of a photovoltaic solar cell, comprising the following method steps:

    a. performing an output test, by exposing the solar cell to light and, in accordance with a test criterion A, testing whether it is possible to pick up at least a predefined electrical minimum output $P_{Min}$, where $P_{Min}$ is at least 50 % of the output achieved on average for this type of solar cell or with the processing line producing this type, under standard conditions,

    b. performing a heat generation test, by applying a predefined heat generation voltage $V_{HE}$ to the solar cell in the reverse direction or applying voltage to the solar cell in the reverse direction in such a way that a predefined heat generation current $I_{HE}$ flows,

    and by testing in accordance with a test criterion B whether the surface of the solar cell does not exceed a predefined limit temperature $T_{GR}$ or, in accordance with a theoretical prediction model, would not exceed that temperature on establishment of a thermal equilibrium,

    **characterised in that**,
    in addition, in a method step c. a breakdown test is performed by applying a predefined breakdown voltage $V_{DB}$ to the solar cell in the reverse direction and, in accordance with a test criterion C, testing whether, on application of the predefined breakdown voltage, at least a current greater than or equal to a predefined minimum breakdown current $I_{DB}$ flows, and/or testing whether, on application of voltage to the solar cell in the reverse direction, a predefined minimum breakdown current $I_{DB}$ flows even in the case of a voltage lower than a breakdown voltage $V_{DB,max}$ that is defined as a maximum.

2. Method according to claim 1,
    **characterised in that**
    a quality criterion I is assigned to the solar cell if at least test criteria A and B and C are met.

3. Method according to either one of the preceding claims,
    **characterised in that**
    a quality criterion II is assigned to the solar cell if at least one of the following two conditions is fulfilled:

    - at least test criteria A and B and C are met,
    - at least test criteria A and B are met and a test criterion D is met, a non-breakdown test being performed in a method step d. by applying a predefined non-breakdown voltage $V_{NDB}$ to the solar cell in the reverse direction and, in accordance with test criterion D, testing whether, on application of the predefined non-breakdown voltage, a current smaller than or equal to a predefined maximum current $I_{NDB}$ flows.

4. Method according to any one of the preceding claims,
    **characterised in that**
    the solar cell is intended for arrangement in a solar cell module, in which solar cell module the solar cells are arranged in strings each having a number of $n_{st}$ solar cells, and in method step c the minimum breakdown voltage $I_{DB}$ is selected to be greater than or equal to, preferably equal to, the current of the solar cell module at the optimum operating point,
    and/or
    the breakdown voltage $V_{DB}$ is selected to be, in terms of its value, smaller or equal to, preferably equal to, the sum of the voltages $V_{mpp}$ of the solar cells of the string at the respective optimum operating point of the solar cells; preferably the breakdown voltage $V_{DB}$ is selected to be, in terms of its value, smaller or equal to, preferably equal to, the sum of the voltages $V_{mpp}$ of the solar cells of the string at the respective optimum operating point of the solar cells multiplied by a factor $1/n_{ab}$, where $n_{ab}$ gives the number of solar cells of a string typically shaded in the case of typical use and incidence of shading or the number of shaded solar cells in a string in the event of the shading of which a loss of power is to be avoided during use in accordance with specifications.

5. Method according to any one of the preceding claims,
    **characterised in that**
    in method step b the limit temperature $T_{GR}$ is selected to be less than 300°C, preferably in the range of from 100°C to 250°C, more preferably in the range of from 130°C to 180°C.

6. Use of a photovoltaic solar cell in a solar cell module,

which solar cell fulfils at least test criterion C according to claim 1, preferably test criteria A and C according to claim 1, more preferably quality criterion I according to claim 2.

7. Solar cell module,
   comprising a plurality of photovoltaic solar cells electrically connected to one another,
   **characterised in that**
   the solar cell module comprises exclusively solar cells, which solar cells fulfil quality criterion I according to claim 2 and/or quality criterion II according to claim 3.

8. Solar cell module according to claim 7,
   **characterised in that**
   the solar cells are arranged in strings and at least one string of the solar cell module comprises exclusively solar cells which fulfil quality criterion I according to claim 2, preferably that string is not assigned a bypass diode.

9. Solar cell module according to either one of claims 7 and 8,
   **characterised in that**
   all solar cells of the module fulfil quality criterion I according to claim 2, preferably
   the solar cell module has no bypass diode electrically connected to the solar cells.

10. Method of producing a photovoltaic solar cell,
    comprising the provision of at least one base region having a base doping concentration and at least one emitter region such that a pn junction and/or pin junction is formed between the base and emitter regions,
    **characterised in that**
    the base doping concentration is selected so that the solar cell fulfils quality criterion I according to claim 2.

11. Method according to claim 10,
    **characterised in that**
    the production method is in principle constructed in accordance with a method known *per se* for the production of a photovoltaic solar cell, wherein at least the base is constructed with a base doping concentration that is higher in comparison with the previously known method.

12. Method according to either one of the preceding claims 10 and 11,

    **characterised in that**
    at least the base is formed in a silicon substrate, preferably the base and the emitter are formed in the silicon substrate.

13. Method according to claim 12,
    **characterised in that**
    the silicon substrate is a multi-crystalline silicon wafer.

14. Method according to claim 13,
    **characterised in that**
    the base doping is constructed to be less than 0.8 Ohm-cm, preferably less than 0.7 Ohm-cm, more preferably less than 0.5 Ohm-cm.

**Revendications**

1. Procédé de contrôle de qualité d'une cellule solaire photovoltaïque,
   comprenant les étapes suivantes :

   a. exécution d'un test de performances au cours duquel la cellule solaire est soumise à une lumière et testée selon un critère de contrôle A pour contrôler si au moins une puissance électrique minimale prédéfinie $P_{Min}$ peut être prélevée, $P_{Min}$ étant au moins égal à 50 % de la puissance moyenne obtenue dans des conditions normalisées pour ce type de cellule ou avec la ligne de procédé fabriquant ce type,
   b. exécution d'un test de dégagement de chaleur au cours duquel la cellule solaire est soumise à une tension de dégagement de chaleur prédéfinie $V_{HE}$ en sens inverse ou la cellule solaire est soumise à une tension en sens inverse de manière qu'un courant de dégagement de chaleur prédéfini $I_{HE}$ circule,

et est testée selon un critère de contrôle B pour contrôler si la température de surface de la cellule solaire ne dépasse pas une température limite prédéfinie $T_{GR}$ ou ne la dépasserait pas selon un modèle prédictif théorique lorsqu'un équilibre thermique est réglé,

**caractérisé en ce**
**qu'**un test supplémentaire de claquage est réalisé dans une étape de procédé c. au cours de laquelle la cellule solaire est soumise à une tension de claquage prédéfinie $V_{DB}$ en sens inverse et testée selon un critère de contrôle C pour contrôler si au moins un courant supérieur ou égal à un courant de claquage minimal prédéfini $I_{DB}$ circule lorsque la tension de claquage prédéfinie est appliquée et/ou testée pour contrôler si un courant de claquage minimal prédéfini $I_{DB}$ circule déjà à une tension inférieure à une tension de claquage maximale définie $V_{DB,max}$ lorsque la cellule solaire est soumise à une tension en sens inverse.

2. Procédé selon la revendication 1,
**caractérisé en ce**
**qu'**un critère de qualité I est associé à la cellule solaire en cas d'existence au moins des critères de contrôle A, B et C.

3. Procédé selon l'une des revendications précédentes,
**caractérisé en ce**
**qu'**un critère de qualité II est associé à la cellule solaire si au moins une des deux conditions suivantes est remplie :

- existence au moins des critères de contrôle A, B et C,
- existence au moins des critères de contrôle A et B et existence d'un critère de contrôle D, un test de non-claquage étant réalisé dans une étape de procédé d. au cours de laquelle la cellule solaire est soumise à une tension de non-claquage prédéfinie $V_{NDB}$ en sens inverse et testée selon un critère de contrôle D pour contrôler si un courant inférieur ou égal à un courant maximal prédéfini $I_{NDB}$ circule lorsque la tension de non-claquage prédéfinie est appliquée.

4. Procédé selon l'une des revendications précédentes,
**caractérisé en ce**
**que** la cellule solaire est prévue pour être disposée dans un module de cellules solaires, dans lequel module de cellules solaires les cellules solaires sont disposées en chaînes ayant chacune un nombre de $n_{st}$ cellules solaires et qu'à l'étape de procédé c, le courant de claquage minimal $I_{DB}$ est supérieur ou égal, de préférence égal au courant du module de cellules solaires au point de fonctionnement optimal
et/ou
**que** la tension de claquage $V_{DB}$ est choisie inférieure ou égale, de préférence égale en valeur absolue à la somme des tensions $V_{mpp}$ des cellules solaires de la chaîne au point de fonctionnement optimal respectif des cellules solaires, de préférence que la tension de claquage $V_{DB}$ est choisie inférieure ou égale, de préférence égale en valeur absolue à la somme des tensions $V_{mpp}$ des cellules solaires de la chaîne au point de fonctionnement optimal respectif des cellules solaires multipliée par un facteur $1/n_{ab}$, $n_{ab}$ indiquant le nombre des cellules solaires d'une chaîne typiquement occultées en cas d'utilisation typique et survenue d'une occultation ou le nombre de cellules solaires occultées dans une chaîne, dont l'occultation ne doit pas entraîner une perte de puissance lorsqu'elles sont utilisées selon la spécification.

5. Procédé selon l'une des revendications précédentes,
**caractérisé en ce**
**qu'**à l'étape de procédé b, la température limite $T_{GR}$ est choisie inférieure à 300 °C, de préférence dans la plage de 100 °C à 250 °C, davantage de préférence dans la plage de 130 °C à 180 °C.

6. Utilisation d'une cellule solaire photovoltaïque dans un module de cellules solaires,
laquelle cellule solaire remplit au moins le critère de contrôle C selon la revendication 1, de préférence les critères de contrôle A et C selon la revendication 1, davantage de préférence le critère de qualité I selon la revendication 2.

7. Module de cellules solaires,
comprenant une pluralité de cellules solaires photovoltaïques reliées entre elles électriquement,
**caractérisé en ce**
**que** le module de cellules solaires comprend exclusivement des cellules solaires, lesquelles cellules solaires remplissent le critère de qualité I selon la revendication 2 et/ou le critère de qualité II selon la revendication 3.

**8.** Module de cellules solaires selon la revendication 7,
**caractérisé en ce**
**que** les cellules solaires sont disposées en chaînes et au moins une chaîne du module de cellules solaires comprend exclusivement des cellules solaires qui remplissent le critère de qualité I selon la revendication 2, de préférence qu'aucune diode by-pass n'est associée à cette chaîne.

**9.** Module de cellules solaires selon l'une des revendications 7 à 8,
**caractérisé en ce**
**que** toutes les cellules solaires du module remplissent le critère de qualité I selon la revendication 2, de préférence
**que** le module de cellules solaires ne présente aucune diode by-pass reliée électriquement aux cellules solaires.

**10.** Procédé de fabrication d'une cellule solaire photovoltaïque,
comprenant la mise à disposition d'au moins une zone de base avec une concentration de dopage de base et au moins une zone d'émetteur, de sorte qu'une jonction pn et/ou pin est formée entre zone de base et zone d'émetteur,
**caractérisé en ce**
**que** la concentration de dopage de base est choisie de manière que la cellule solaire remplisse le critère de qualité I selon la revendication 2.

**11.** Procédé selon la revendication 10,
**caractérisé en ce**
**que** le procédé de fabrication est réalisé fondamentalement selon un procédé connu en soi de fabrication d'une cellule solaire photovoltaïque,
selon lequel au moins la base est réalisée avec une concentration de dopage de base plus élevée par rapport au procédé connu.

**12.** Procédé selon l'une des revendications précédentes 10 à 11,
**caractérisé en ce**
**qu'**au moins la base est réalisée dans un substrat de silicium, de préférence que la base et l'émetteur sont réalisés dans le substrat de silicium.

**13.** Procédé selon la revendication 12,
**caractérisé en ce**
**que** le substrat de silicium est une plaquette de silicium multicristallin.

**14.** Procédé selon la revendication 13,
**caractérisé en ce**
**que** le dopage de base est réalisé inférieur à 0,8 ohm.cm, de préférence inférieur à 0,7 ohm.cm, davantage de préférence inférieur à 0,5 ohm.cm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5616185 A
- WO 2010029180 A1
- DE 102008043206 A1

- DE 102008043458 A1
- DE 102009034317 A1

**In der Beschreibung aufgeführte Nicht-Patentliteratur**

- **BREITENSTEIN, O. ; J. BAUER ; J.-M. WAGNER, ; N. D. ZAKHAROV, ; H. BLUMTRITT ; A. LOTNYK ; M. KASERMANN ; W. KWAPIL ; W. WARTA.** Defecf-induced breakdown in multicrystalline silicon solar cells. *IEEE Transactions on Electron Devices,* 2010, vol. 57 (9), 2227-2234